# EUROPEAN PATENT SPECIFICATION

(11) **EP 2 667 429 B1**
(45) Date of publication and mention of the grant of the patent: **17.12.2014**
(21) Application number: 13168777.4
(22) Date of filing: 22.05.2013
(51) Int. Cl.: H01M 2/20

(54) **Electric cells and assembled battery**
Elektrische Zellen und zusammengesetzte Batterie
Cellules électriques et batterie assemblée

(30) Priority: 25.05.2012 JP 2012119864
(43) Date of publication of application: 27.11.2013
(73) Proprietor: Hitachi Automotive Systems, Ltd., Hitachinaka-shi Ibaraki 312-8503 (JP)
(72) Inventor: Tsunaki, Takuro, Ibaraki, 312-0061 (JP); Sasaki, Takashi, Ibaraki, 312-0061 (JP); Urano, Kazuaki, Ibaraki, 312-0061 (JP); Saimaru, Sho, Ibaraki, 312-0061 (JP)
(74) Representative: Beetz & Partner

(56) References cited:
- EP-A1- 2 254 176
- EP-A1- 2 581 966

## Description

### BACKGROUND OF THE INVENTION

### 1. Field of the Invention

The present invention relates to electric cells and an assembled battery including multiple electric cells.

### 2. Description of the Related Art

Secondary cells with high capacity (Wh) are now being developed as the power sources of hybrid or regular electric automobiles. Among them, rectangular lithium-ion secondary cells are receiving the most attention because they are high in energy density (Wh/kg).

Rectangular lithium-ion secondary cells each use a flat wound-electrode assembly. To fabricate the wound-electrode assembly, a positive foil is coated with a positive active material to form a positive electrode, and a negative foil is coated with a negative active material to form a negative electrode. These positive and negative electrodes are then wound with insulating separators placed between them. The resultant wound-electrode assembly is electrically connected to the positive and negative external terminals attached to the cell cover of a cell container. The wound-electrode assembly is then housed within the cell case in the cell container, and the opening of the cell case is sealed by the cell cover. Thereafter an electrolyte is injected through the electrolyte filling hole of the cell container. After the injection, a plug is inserted into the electrolyte filling hole, followed by sealing of the electrolyte filling hole by laser welding. The resultant assembly is a secondary cell.

Such secondary cells are assembled into a battery by electrically connecting the positive and negative external terminals of the cells by busbars. The busbars are fastened by nuts and bolts to or welded to those external terminals.

JP-2011-233399-A discloses a secondary cell that allows connection of busbars to external terminals by nuts and bolts. This secondary cell includes the following components: collector electrodes (referred to as the 'connection plates' in JP-2011-233399-A) connected to a wound-electrode assembly; connection pins for electrically connecting external terminals to the collector electrodes; and the external terminals that each include a pin insertion hole for allowing insertion of a connection pin and a bolt insertion hole for allowing insertion of the shaft of a bolt.

### SUMMARY OF THE INVENTION

While the secondary cell of JP-2011-233399-A allows connection of busbars to external terminals by nuts and bolts, it does not allow welding of the busbars to the external terminals.

Likewise, a secondary cell that allows welding of busbars to external terminals does not allow connection of the busbars to the external terminals by nuts and bolts.

An electric cell according to the present invention includes: a power generating element including electrodes; a cell container including a cell case for housing the power generating element and a cell cover for sealing an opening of the cell case; two external terminals disposed on the cell cover; and two collector electrodes for connecting the electrodes of the power generating element to the external terminals. Each of the external terminals includes: a connector connected to one of the collector electrodes within the cell container; a flat section located right above the connector and exposed to the outside of the cell container; and a bolting section located adjacent to the flat section and having an insertion hole. The connector, the flat section, and the bolting section are integrally formed.

An assembled battery according to the invention includes multiple electric cells as recited in the above, and the electric cells are electrically connected to one another by busbars. The busbars are fastened by nuts and bolts to or welded to the external terminals.

In accordance with the invention, it is possible to provide electric cells and an assembled battery that allow connection of busbars and external terminals by a bolting method (using nuts and bolts) or a welding method.

### BRIEF DESCRIPTION OF THE DRAWINGS

Other objects and advantages of the invention will become apparent from the following description of embodiments with reference to the accompanying drawings in which:
FIG. 1 is an external perspective view of an assembled battery;
FIG. 2 is a partial cross sectional perspective view of the battery;
FIG. 3 is an exploded perspective view of the battery in which busbars are fixed by nuts and bolts;
FIG. 4 is an external perspective view of one of the electric cells that constitute the battery;
FIG. 5 is an exploded perspective view of one of the electric cells;
FIG. 6 is a perspective view of a wound-electrode assembly;
FIG. 7 is an exploded perspective view of a cover assembly;
FIGS. 8A to 8C are cross sections of the cover assembly;
FIGS. 9A and 9B illustrate the process of swaging one end of a connector of an external terminal to a collector electrode;
FIG. 10 is an exploded perspective view of an assembled battery in which busbars are welded;
FIG. 11 is a cross section illustrating a busbar welded to positive and negative welding sections; and
FIG. 12 illustrates an assembled battery in which one end of a busbar is welded to an external terminal and the other end of the busbar is connected to another external terminal by a nut and a bolt.

### DETAILED DESCRIPTION OF THE PREFERRED EMBODIMENT

With reference to the accompanying drawings, an assembled battery according to an embodiment of the invention will now be described. The battery is intended for use for the electric storage devices of electric cars, whether hybrid or regular, and includes multiple rectangular lithium-ion secondary cells (hereinafter referred to as 'electric cells' or simply as 'cells').

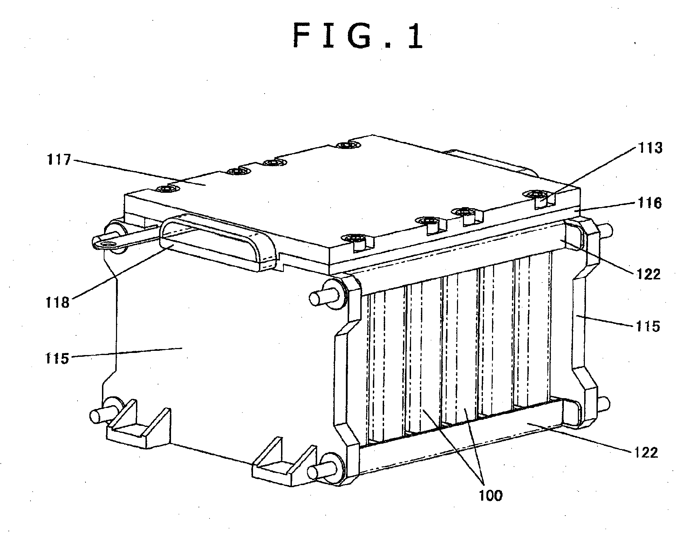

FIGS. 1, 2, and 3 are an external perspective view, cross-sectional perspective view, and exploded perspective view, respectively, of the assembled battery. The battery includes multiple electric cells 100. The electric cells 100 are arranged side by side and assembled into a single unit by a pair of end plates 115, multiple cell holders 114, and four shafts 122. The electric cells 100 arranged are sandwiched by the end plates 115 from the both ends of the arrangement direction (i.e., a longitudinal direction of the battery). The electric cells 100 are protected from above by a top plate 116 and a top cover 117.

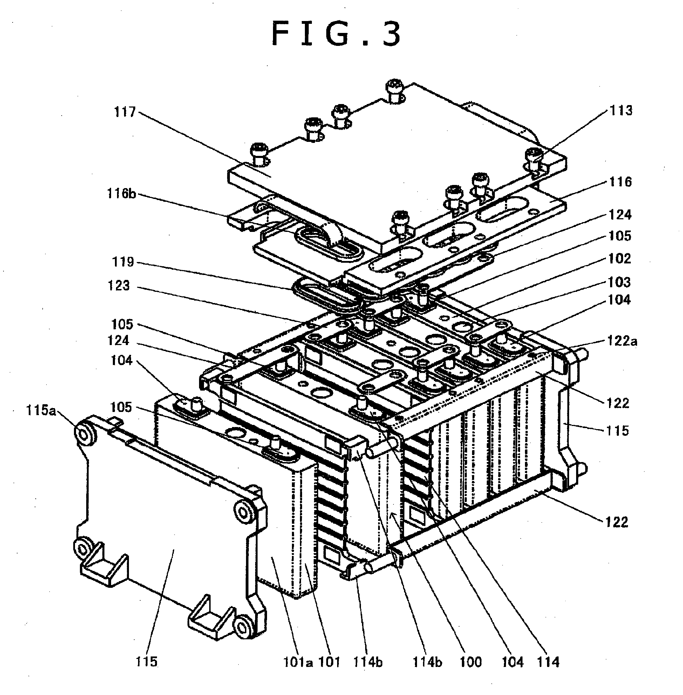

As illustrated in FIG. 3, the electric cells 100 are each shaped into a flat cuboid that has two wide side-plates 101a, and the cells 100 are arranged such that the side-plates 101a of the cells face each other. Any two electric cells 100 placed side by side are reversed in terms of front-back relations so that the positive external terminal 104 and the negative external terminals 105 attached to the cell cover 102 of a particular electric cell 100 are placed side by side with the negative external terminal 105 and the positive external terminal 104, respectively, of the cell cover 102 of an adjacent cell 100.

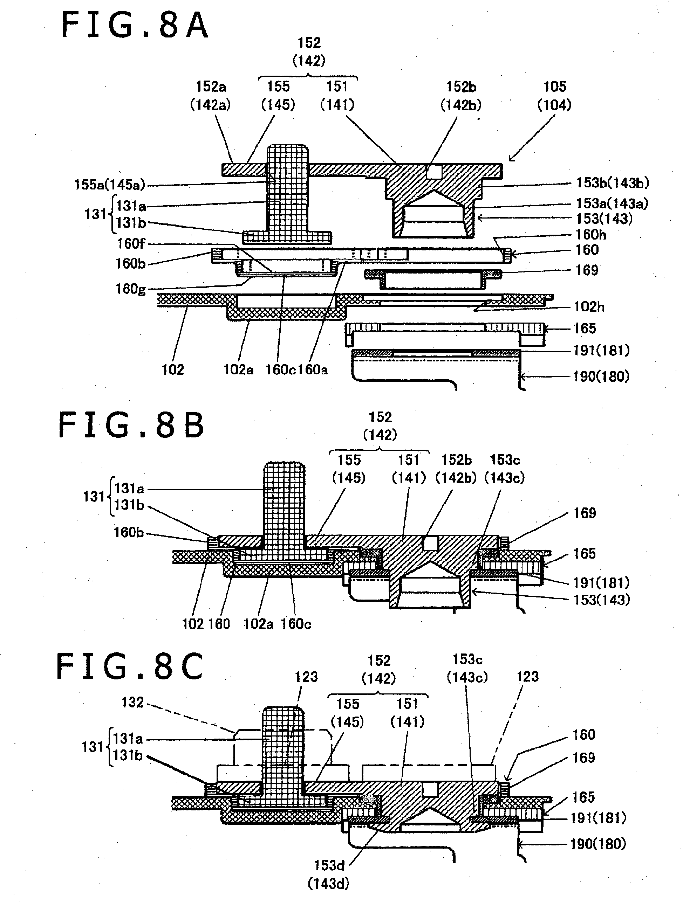

The electric cells 100 are assembled into a battery by electrically connecting the positive and negative external terminals 104 and 105 of the cells 100 by metal plates or busbars 123. The negative terminal 105 of the farthest cell 100 and the positive terminal 104 of the nearest cell 100 of FIG. 3 as seen from the viewer are electrically connected to other batteries not illustrated, whether in series or parallel, by busbars 124. They can also be connected via the busbars 124 to power-extracting terminals not illustrated. As discussed later, the busbars 123 and 124 are fixed to the bolting sections 145 and 155 of the positive and negative terminals 104 and 105 by screwing nuts 132 (see FIG. 8C) onto the shafts 131a of the bolts 131 attached to the cells 100. The busbars 123 and 124 each have two through-holes for allowing insertion of the shafts 131a of the bolts 131.

The end plates 115 are each shaped like a rectangular flat panel, similar to the wide side-plates 101a of the electric cells 100. Disposed at the four corners of each end plate 115 are through-holes 115a (see FIG. 3), which allow the four shafts 122 to be inserted between the two end plates 115.

As illustrated in FIGS. 1 to 3, the part of each shaft 122 that is sandwiched between the two end plates 115 is L-shaped in cross section, and a contact plate is attached to each end of the shafts 122 that comes into contact with one of the end plates 115. Fixed to each contact plate is a circular shaft that acts as a male screw to be inserted into one of the through-holes 115a of the end plates 115. While in contact with the inner surfaces of the end plates 115, the contact plates determine the length of the space between the two end plates 115.

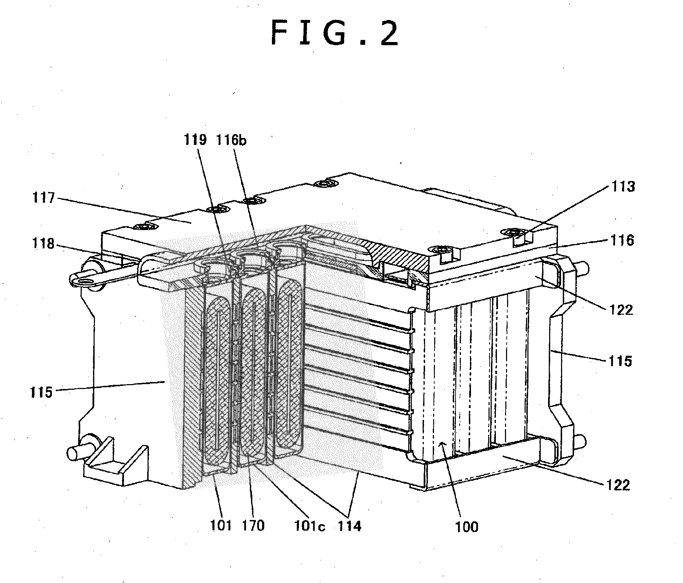

As illustrated in FIGS. 2 and 3, the cell holders 114, used to hold the corners of the electric cells 100, are placed between the cells 100. By screwing nuts onto the male screws of the shafts 122 from the outer side of the end plates 115, the cell holders 114 are sandwiched between the two end plates 115 and thus compressed to a certain degree. This determines the locations of the cells 100 in a longitudinal direction of the battery.

As illustrated in FIG. 3, four shoulders 114b each having an L-shaped cross section are formed at the four corners of each cell holder 114. The inner shape of the shoulders 114b matches the shape of the corners of the cells 100. This allows the four L-shaped shoulders 114b of a cell holder 114 to hold the corners of an electric cell 100. Thus, the L-shaped shoulders 114b also serve the function of determining the locations of the cells 100 in a direction perpendicular to a longitudinal direction of the battery.

On the other hand, the outer shape of the shoulders 114b of each cell holder 114 matches the L shape of the shafts 122. This allows the L-shaped shafts 122 to hold the shoulders 114b of the cell holders 114. It thus follows that each electric cell 100 is held by the four shafts 122 via a cell holder 114.

As illustrated in FIGS. 1 to 3, the top plate 116 covers the cells 100 from above, and the top cover 117 is placed on the top plate 116. The top plate 116 and the top cover 117 are fastened at a given contact pressure by screwing bolts 113 into the bolt holes 122a located on the top surfaces of the shafts 122 (see FIG. 3). As illustrated in FIG. 2, screwing the top plate 116 and the top cover 117 together results in the formation of a gas outlet that extends in a longitudinal direction of the battery. Located at the ends of the gas outlet are joint sections 118 to which hoses or the like (not shown) are connected to discharge gas out of a vehicle having the battery installed.

As illustrated in FIGS. 2 and 3, oval openings 116b, used for gas discharge, are formed through the top plate 116 such that they are located directly above the gas release vents 103 of the cells 100 (discussed later in further detail). For the purpose of filling the space between the oval openings 116b and the cell covers 102 of the cells 100, a sealing material 119 is inserted between them.

The above gas discharging structure is designed such that when the release vents 103 of the cells 100 open, gas is discharged from the release vents 103, then directed through the oval openings 116b into the gas outlet located between the top plate 116 and the top cover 117, and eventually discharged out of the vehicle through the joint sections 118.

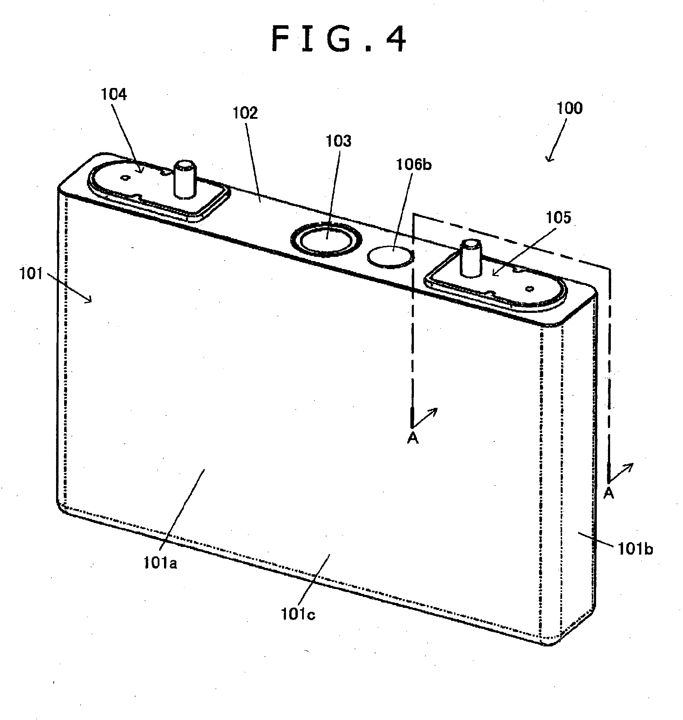

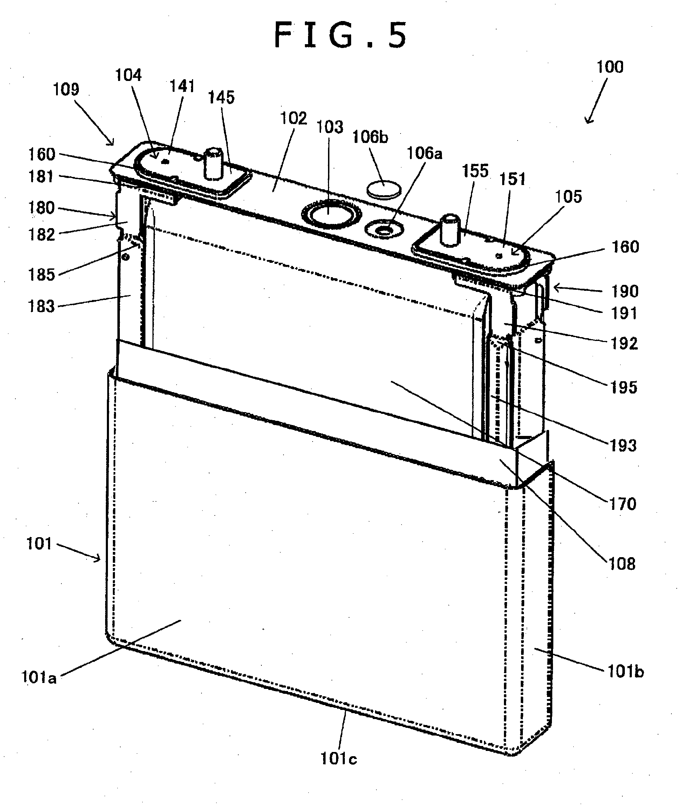

We now describe the electric cells 100 that constitute the battery. The cells 100 are the same in terms of structure. FIG. 4 is an external perspective view of one of the cells 100, and FIG. 5 is an exploded perspective view of that cell 100.

As illustrated in FIG. 4, the cell 100 includes a cell case 101 and a cell cover 102, which constitute a cell container. The cell case 101 and the cell cover 102 are formed of aluminum, aluminum alloy, or the like. The cell case 101 is made by shaping such a material into a flat, rectangular, top-opened box by deep drawing. The cell case 101 includes the following components: a rectangular bottom plate 101c; two wide side-plates 101a that extend vertically from the two long sides of the bottom plate 101c; and two narrow side-plates 101b that extend vertically from the two short sides of the bottom plate 101c.

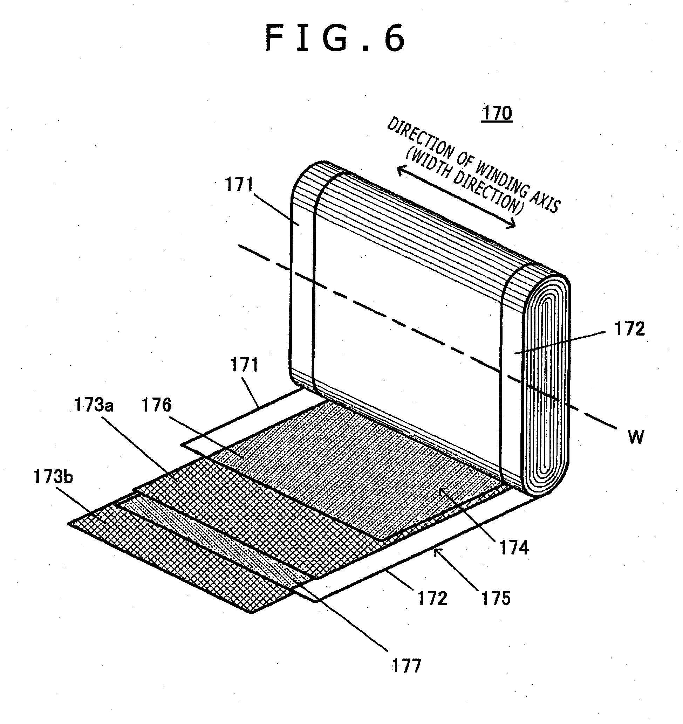

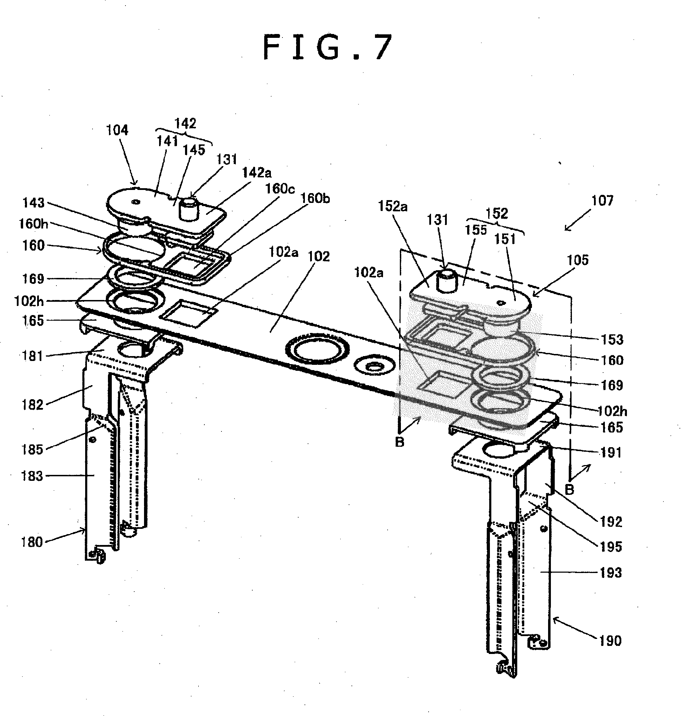

As illustrated in FIG. 5, the cell case 101 houses a wound-electrode assembly 170 (see FIG. 6) held by a cover assembly 107 (see FIG. 7). The wound-electrode assembly 170 and the positive and negative collector electrodes 180 and 190 attached to the positive and negative electrodes 174 and 175 of the wound-electrode assembly 170 are covered by an insulating case 108 and put into the cell case 101. The insulating case 108 is formed of an insulating resin such as polypropylene or the like. With the insulating case 108, the cell case 101 and the wound-electrode assembly 170 can be electrically isolated from each other.

As illustrated in FIGS. 4 and 5, the cell cover 102 is a flat rectangular plate and laser-welded onto the top side of the cell case 101 so that the cell cover 102 seals the top opening of the cell case 101. As illustrated in FIG. 4, a positive external terminal 104 and a negative external terminal 105 are attached to the cell cover 102. The positive external terminal 104 and the negative external terminal 105 are electrically connected to the positive electrode 174 and the negative electrode 175, respectively, of the wound-electrode assembly 170 (see FIG. 6).

The electric connection of the positive and negative external terminals 104 and 105 to the positive and negative electrodes 174 and 175 of the wound-electrode assembly 170 allows power to be supplied from the assembly 170 through the positive and negative external terminals 104 and 105 to an external device or allows externally-generated power to be fed through the positive and negative external terminals 104 and 105 to the wound-electrode assembly 170 for charging.

As illustrated in FIG. 5, an electrolyte filling hole 106a is formed through the cell cover 102 so that an electrolyte can be injected into the cell container. After the injection, the electrolyte filling hole 106a is sealed by a plug 106b. An example of the electrolyte is a nonaqueous electrolyte formed by dissolving a lithium salt such as lithium hexafluorophosphate (LiPF₆) into a carbonate ester solvent such as ethylene carbonate.

The cell cover 102 also includes a gas release vent 103. The gas release vent 103 is formed by making part of the cell cover 102 thinner with a press machine; alternatively, it is also possible to form an opening through the cell cover 102 and then laser-weld a thin plate onto that opening. The gas release vent 103 is designed to reduce the pressure inside the cell container. When, for example, the cell 100 generates excessive heat due to overcharging or the like, gases are generated, which in turn increases the pressure inside the cell container. When the pressure increases up to a given value, the gas release vent 103 is caused to rupture or open, allowing release of the gasses from the inside.

With reference now to FIG. 6, the wound-electrode assembly 170 is described. FIG. 6 is a perspective view of the wound-electrode assembly 170, illustrating its unwound end. The wound-electrode assembly 170, a power generating component, has a laminated structure and is formed by winding the elongated positive and negative electrodes 174 and 175 around a winding axis W into the shape of a flat panel, with separators 173a and 173b inserted between the electrodes 174 and 175.

The positive electrode 174 is formed by mixing a positive active material with a binder and coating both surfaces of a positive foil 171 with layers 176 of the positive active material mix. The negative electrode 175 is formed by mixing a negative active material with a binder and coating both surfaces of a negative foil 172 with layers 177 of the negative active material mix.

The positive foil 171 is an aluminum foil that is about 20 to 30 µm in thickness while the negative foil 172 is a copper foil that is about 15 to 20 µm in thickness. The separators 173a and 173b are formed of a microporous polyethylene resin that allows the passage of lithium ions. The positive active material is a lithium-containing transition metal oxide such as manganic acid lithium while the negative active material is a carbon material, such as graphite, which stores and discharges lithium ions.

One of the width-directional ends of the wound-electrode assembly 170 (the term 'width direction' refers to the direction W of the electrode winding axis that is perpendicular to the electrode winding direction) is an uncoated section that is not coated with the positive active material layers 176, meaning that the exposed portion of the positive foil 171 is rolled onto itself. The other end is an uncoated section that is not coated with the negative active material layers 177, meaning that the exposed portion of the negative foil 172 is rolled onto itself. These width-directional ends of the wound-electrode assembly 170 are pressed and then connected to the later-described positive collector electrode 180 and negative collector electrode 190 of the cover assembly 107 by ultrasonic welding (see FIG. 7), thus forming an electrode unit 109 (see FIG. 5).

The structure of the cover assembly 107 is now described in detail with reference to FIGS. 7 and 8. FIG. 7 is an exploded perspective view of the cover assembly 107 while FIGS. 8A to 8C are cross sections illustrating how to assemble the cover assembly 107. FIG. 8A is a cross section taken along line B-B of FIG. 7. FIG. 8B is a cross section illustrating assembled components. In FIG. 8B, the distal end of a positive connector 143 or a negative connector 153 is not yet swaged. The cross section of FIG. 8C is taken along line A-A of FIG. 4 and illustrates the positive connector 143 or the negative connector 153 that has been swaged. While FIGS. 8A to 8C illustrate the negative-side components, the positive-side components are the same in terms of structure and thus denoted by the reference numerals in the parentheses. FIG. 8C illustrates two connection methods. One involves the use of a nut 132 to connect a busbar 123 to the positive external terminal 104 or the negative external terminal 105 (the nut 132 and the busbar 123 are illustrated by the two-dot chain lines), and the other involves welding. To assemble the battery, only one of the two is used.

As illustrated in FIGS. 7 and 8A, the cover assembly 107 includes the following components: a cell cover 102; the positive external terminal 104 attached to one end of the cell cover 102; the negative external terminal 105 attached to the other end of the cell cover 102; a pair of external insulators 160; a pair of internal insulators 165; a pair of gaskets 169; a positive collector electrode 180; and a negative collector electrode 190.

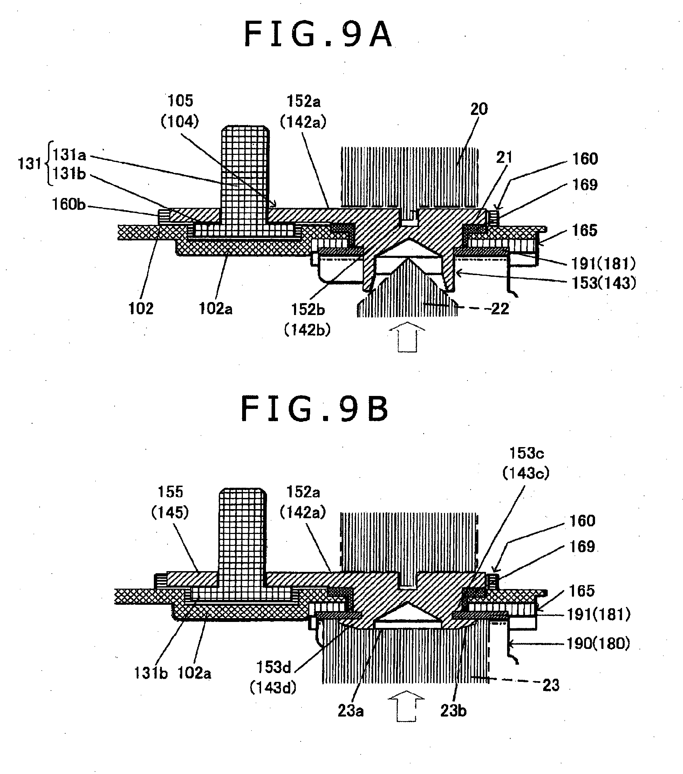

The positive external terminal 104 and the positive collector electrode 180 are formed of aluminum. As discussed later, the positive external terminal 104 is electrically connected to the positive collector electrode 180 by the positive connector 143 being swaged to the seat section 181 of the positive collector electrode 180 (see FIG. 9). The negative external terminal 105 and the negative collector electrode 190 are formed of copper. As also discussed later, the negative external terminal 105 is electrically connected to the negative collector electrode 190 by the negative connector 153 being swaged to the seat section 191 of the negative collector electrode 190 (see FIG. 9).

The positive external terminal 104, the negative external terminal 105, the positive collector electrode 180, and the negative collector electrode 190 are connected to the cell cover 102 via the external insulators 160, the internal insulators 165, and the gaskets 169. The external insulators 160 and the internal insulators 165 are formed of an insulating resin such as polypropylene (PP) or the like. The gaskets 169 are formed of an insulating resin such as tetrafluoroethylene-perfluoroalkylvinylether copolymers (PFA) or the like.

Each electric cell 100 is designed so that busbars 123 and 124 can be connected to the positive external terminal 104 and the negative external terminal 105 by nuts 132 and bolts 131 or can be welded to those terminals 104 and 105. Thus, according to the present embodiment of the invention, the bolting method or the welding method can be employed for the connection of the busbars 123 and 124 to the positive external terminal 104 and the negative external terminal 105.

The example of FIG. 3 adopts the bolting method in which busbars 123 and 124 are fastened by nuts 132 and bolts 131 to assemble the battery. As illustrated in FIG. 7, each electric cell 100 includes a pair of bolts 131 to fasten busbars 123 and 124. Referring to FIG. 8A, each of the bolts 131 includes the following components: a flat rectangular head 131b; and a shaft 131a that extends from the head 131b and acts as a male screw. The bolts 131 are formed of alloy steel such as stainless steel and chromium-molybdenum steel.

As illustrated in FIGS. 7 and 8A, the positive external terminal 104 includes the following components: a flat rectangular positive contact section 142; and a cylindrical positive connector 143 that extends from the positive contact section 142 toward the inside of the cell container. The positive contact section 142 and the positive connector 143 are formed as a single component by forging or molding. The positive contact section 142 is a section to which busbars 123 and 124 are electrically connected and lies outside of the cell container. The positive connector 143 is electrically connected to the positive collector electrode 180 and lies within the cell container.

Similar to the positive external terminal 104, the negative external terminal 105 includes the following components: a flat rectangular negative contact section 152; and a cylindrical negative connector 153 that extends from the negative contact section 152 toward the inside of the cell container. The negative contact section 152 and the negative connector 153 are formed as a single component by forging or molding. The negative contact section 152 is a section to which busbars 123 and 124 are electrically connected and lies outside of the cell container. The negative connector 153 is electrically connected to the positive collector electrode 190 and lies within the cell container.

The positive contact section 142 includes a flat contact surface 142a with which busbars 123 and 124 come into contact. The positive contact section 142 also includes the following components: a positive bolting section 145 to which a busbar 123 or 124 is fastened by a nut 132 and a bolt 131; and a positive welding section 141, located next to the positive bolting section 145, to which busbars 123 and 124 are welded. Located between the positive bolting section 145 and the positive welding section 141 is a constricted section that serves as a connecter between them.

Similar to the positive contact section 142, the negative contact section 152 includes a flat contact surface 152a with which busbars 123 and 124 come into contact. The negative contact section 152 also includes the following components: a negative bolting section 155 to which a busbars 123 or 124 is fastened by a nut 132 and a bolt 131; and a negative welding section 151, located next to the negative bolting section 155, to which busbars 123 and 124 are welded. Located between the negative bolting section 155 and the negative welding section 151 is a constricted section that serves as a connecter between them.

The positive bolting section 145 includes a bolt hole 145a that allows insertion of the shaft 131a of a bolt 131. Likewise, the negative bolting section 155 includes a bolt hole 155a that allows insertion of the shaft 131a of a bolt 131.

The positive connector 143 is located right below the positive welding section 141. Specifically, the positive connector 143 extends from the positive welding section 141 toward the inside of the cell container such that the positive connector 143 penetrates an insertion hole 102h of the cell cover 102. The positive connector 143 includes the following components: a proximal section 143b that extends from the positive welding section 141 toward the inside of the cell container; and a distal section 143a that extends from the proximal section 143b toward the inside of the cell container. The distal section 143a is smaller in outer diameter than the proximal section 143b. As discussed later, the distal section 143a is formed into the shape of a cylinder and swaged to the seat section 181 of the positive collector electrode 180.

Similar to the positive connector 143, the negative connector 153 is located right below the negative welding section 151. Specifically, the negative connector 153 extends from the negative welding section 151 toward the inside of the cell container such that the negative connector 153 penetrates another insertion hole 102h of the cell cover 102. The negative connector 153 includes the following components: a proximal section 153b that extends from the negative welding section 151 toward the inside of the cell container; and a distal section 153a that extends from the proximal section 153b toward the inside of the cell container. The distal section 153a is smaller in outer diameter than the proximal section 153b. As discussed later, the distal section 153a is formed into the shape of a cylinder and swaged to the seat section 191 of the negative collector electrode 190.

The cell cover 102 includes the following components: two concave engagement sections 102a, or sections indented toward the inside of the cell container; and the two insertion holes 102h that allow insertion of the proximal section 143b of the positive connector 143 and the proximal section 153b of the negative connector 153. The concave engagement sections 102a are where the heads 131b of the bolts 131 are fitted via the external insulators 160. Thus, the concave engagement sections 102a are formed into a rectangular shape in plan, similar to the shape of the heads 131b of the bolts 131.

The external insulators 160 of the cell cover 102 are described next. Because the external insulators 160 used for the positive and negative sides have the same structure, only the positive-side external insulator 160 is discussed. The positive-side external insulator 160 includes a terminal insulating section 160a, side-walls 160b, a bolt insulating section 160c, and a hole 160 through which a gasket 169 is inserted.

The terminal insulating section 160a lies between the positive bolting section 145 of the positive external terminal 104 and the cell cover 102 to insulate the positive external terminal 104 from the cell cover 102. The side-walls 160b are the outer edges of the external insulator 160 and cover the walls of positive bolting section 145 and the positive welding section 141 of the positive external terminal 104 that are exposed to the outside of the cell container.

The bolt insulating section 160c includes a concave surface 160f that is indented from the terminal insulating section 160a toward the cell cover 102 and a convex surface 160g, located across from the concave surface 160f, that protrudes from the terminal insulating section 160a toward the cell cover 102. The concave surface 160f is shaped to match the shape of the heads 131b of the bolts 131 while the convex surface 160g is shaped to match the shape of the concave engagement sections 102a of the cell cover 102.

The head 131b of a bolt 131 is fitted into one of the concave engagement sections 102a of the cell cover 102 via the bolt insulating section 160c. Thus, the bolt insulating section 160c is placed between the head 131b of the bolt 131 and that concave engagement section 102a of the cell cover 102 to insulate the bolt 131 from the cell cover 102.

The gaskets 169 of the cell cover 102 are described next. Because the gaskets 169 used for the positive and negative sides have the same structure, only the positive-side gasket 169 is discussed. The positive-side gasket 169 includes a cylinder and a flange attached to one end of the cylinder. The gasket 169 is attached to the proximal section 143b of the positive connector 143.

The gasket 169 is placed between one of the insertion holes 102h of the cell cover 102 and the distal section 143b of the positive connector 143 to seal the space between that insertion hole 102h and the distal section 143b. As stated above, the gasket 169 has insulating properties; thus, the gasket 169 insulates the positive connector 143 from the cell cover 102.

The positive collector electrode 180 and the negative collector electrode 190 are described next. As illustrated in FIG. 7, the positive collector electrode 180 includes the following components: the seat section 181 that faces the inner surface of the cell cover 102; two side plates 182, connected to the seat section 181, that extend along the wide side-plates 101a of the cell case 101 toward the bottom plate 101c of the cell case 101; and two connected plates 183 that are each connected to the lower end of one of the side-plates 182 via a slanted section 185. The seat section 181 includes a hole into which the positive connector 143 is fitted.

Similar to the positive collector electrode 180, the negative collector electrode 190 includes the following components: the seat section 191 that faces the inner surface of the cell cover 102; two side plates 192, connected to the seat section 191, that extend along the wide side-plates 101a of the cell case 101 toward the bottom plate 101c of the cell case 101; and two connected plates 193 that are each connected to the lower end of one of the side-plates 192 via a slanted section 195. The seat section 191 includes a hole into which the negative connector 153 is fitted.

The flat rectangular internal insulators 165 are placed between the seat section 181 of the positive collector electrode 180 and the cell cover 102 and between the seat section 191 of the negative collector electrode 190 and the cell cover 102, for the purpose of isolating the cell cover 102 from the positive collector electrode 180 and the negative collector electrode 190. The positive internal insulators 165 and the negative internal insulators 165 are structurally the same and include holes for allowing insertion of the proximal section 143b of the positive connector 143 and the proximal section 153b of the negative connector 153, respectively.

As illustrated in FIG. 8B, the positive connector 143 is inserted into one of the holes 102h of the cell cover 102 and the hole of one of the internal insulators 165, with a gasket 169 attached around the proximal section 143b. The distal end 143a of the positive connector 143 is inserted into the hole of the seat section 181 of the positive collector electrode 180. As illustrated, the stepped section 143c located between the proximal section 143b and the distal section 143a comes into contact with the seat section 181, and the flange of the gasket 169 is placed between the positive welding section 141 and the outer surface of the cell cover 102. In that state, the end of the distal section 143a is swaged to the seat section 181, resulting in the formation of a swaged section 143d (see FIG. 8C).

As a result, the seat section 181 is held by the swaged section 143d and the proximal section 143b, allowing electrical connection between the positive collector electrode 180 and the positive external terminal 104. After the swaging, the swaged section 143d and the seat section 181 of the positive collector electrode 180 may be spot-welded by a laser.

Similarly, the negative connector 153 is inserted into the other hole 102h of the cell cover 102 and the hole of the other internal insulators 165, with a gasket 169 attached around the proximal section 153b. The distal end 153a of the negative connector 153 is inserted into the hole of the seat section 191 of the negative collector electrode 190. As illustrated, the stepped section 153c located between the proximal section 153b and the distal section 153a comes into contact with the seat section 191, and the flange of the gasket 169 is placed between the negative welding section 151 and the outer surface of the cell cover 102. In that state, the end of the distal section 153a is swaged to the seat section 191, resulting in the formation of a swaged section 153d.

As a result, the seat section 191 is held by the swaged section 153d and the proximal section 153b, allowing electrical connection between the negative collector electrode 190 and the negative external terminal 105. After the swaging, the swaged section 153d and the seat section 191 of the negative collector electrode 190 may be spot-welded by a laser.

The contact surface 142a of the positive contact section 142 includes a concave section 142b. The concave section 142b is located at the central axis of the positive connector 143 and indented toward the inside of the cell container. Likewise, the contact surface 152a of the negative contact section 152 includes a concave section 152b. The concave section 152b is located at the central axis of the negative connector 153 and indented toward the inside of the cell container. In the present embodiment, these concave sections 142b and 152b are utilized for the alignment of a metal mold of a swage.

Referring now to FIGS. 9A and 9B, the process of swaging is described. Because the same process is involved in swaging the positive connector 143 to the seat section 181 of the positive collector electrode 180 and in swaging the negative connector 153 to the seat section 191 of the negative collector electrode 190, we describe only the swaging process for the former.

As illustrated in FIG. 9A, a cone-tipped metal mold 22 is pressed into the swage hole (bottom hole) of the positive connector 143, with a flat surface of a metal mold 20 pressed against the contact surface 142a of the positive connector 142. This outwardly spreads the distal end of the cylindrical positive connector 143. As a result, the positive collector electrode 180, the positive external terminal 104, a gasket 169, an external insulator 160, and an internal insulator 165 are temporarily fixed to the cell cover 102.

The metal mold 20 of the swage includes a pin-shaped projection 21. This projection 21 is engaged into the concave section 142b located on the contact surface 142a so that the positive external terminal 104 can be aligned with the swage with ease and accuracy. This in turn allows accurate insertion of the cone-tipped metal mold 22 into the positive connector 143.

After the insertion of the cone-tipped metal mold 22, it is replaced by another with a larger end angle, followed by insertion of the larger one into the swage hole of the positive connector 143. This is repeated until the distal end of the positive connector 143 is spread outward. As illustrated in FIG. 9B, a metal mold 23 includes a flat surface 23a that is parallel to the cell cover 102 and circular in plan; and a slanted section 23b that is ring-shaped in plan and slanted from the flat surface 23a toward the cell cover 102. Pressing this metal mold 23 against the distal end of the positive connector 143 results in the swaged section 143d, which is ring-shaped in plan. As a result, the positive collector electrode 180, the positive external terminal 104, the gasket 169, the external insulator 160, and the internal insulator 165 are firmly fixed to the cell cover 102. Likewise, swaging the negative connector 153 to the seat section 191 of the negative collector electrode 190 allows permanent fixing of the negative collector electrode 190, the negative external terminal 105, a gasket 169, an external insulator 160, and an internal insulator 165 to the cell cover 102.

After the fixing of the positive external terminal 104 to the cell cover 102, a cuboid-shaped positive-side space is defined by the positive bolting section 145 and by one of the concave engagement sections 102a of the cell cover 102. As illustrated in FIG. 8C, the head 131b of a bolt 131 is placed in this space between the cell cover 102 and the positive bolting section 145.

The positive-side space is used when a busbar 123 or 124 is to be fastened to the positive bolting section 145 by a nut 132 and a bolt 131. When the nut 132 is screwed onto the shaft 131a of the bolt 131, the side surfaces of the concave engagement section 102a of the cell cover 102 that define the positive-side space are engaged with the side surfaces of the head 131b of the bolt 131 via an external insulator 160, thereby preventing the rotation of the bolt 131. On the other hand, the bottom surface of the positive bolting section 145 that faces the cell cover 102 and defines the positive-side space is engaged with the head 131b of the bolt 131, preventing the bolt 131 from being pulled out. As above, by the positive-side space housing the head 131b of the bolt 131, a busbar 123 or 124 can easily be connected to the positive external terminal 104 by the nut 132 and the bolt 131.

Likewise, after the fixing of the negative external terminal 105 to the cell cover 102, a cuboid-shaped negative-side space is defined by the negative bolting section 155 and by the other concave engagement section 102a of the cell cover 102. As illustrated in FIG. 8C, the head 131b of a bolt 131 is placed in this space between the cell cover 102 and the positive bolting section 155.

The negative-side space is used when a busbar 123 or 124 is to be fastened to the negative bolting section 155 by a nut 132 and a bolt 131. When the nut 132 is screwed onto the shaft 131a of the bolt 131, the side surfaces of the concave engagement section 102a of the cell cover 102 that define the negative-side space are engaged with the side surfaces of the head 131b of the bolt 131 via an external insulator 160, thereby preventing the rotation of the bolt 131. On the other hand, the bottom surface of the negative bolting section 155 that faces the cell cover 102 and defines the negative-side space is engaged with the head 131b of the bolt 131, preventing the bolt 131 from being pulled out. As above, by the negative-side space housing the head 131b of the bolt 131, a busbar 123 or 124 can easily be connected to the negative external terminal 105 by the nut 132 and the bolt 131.

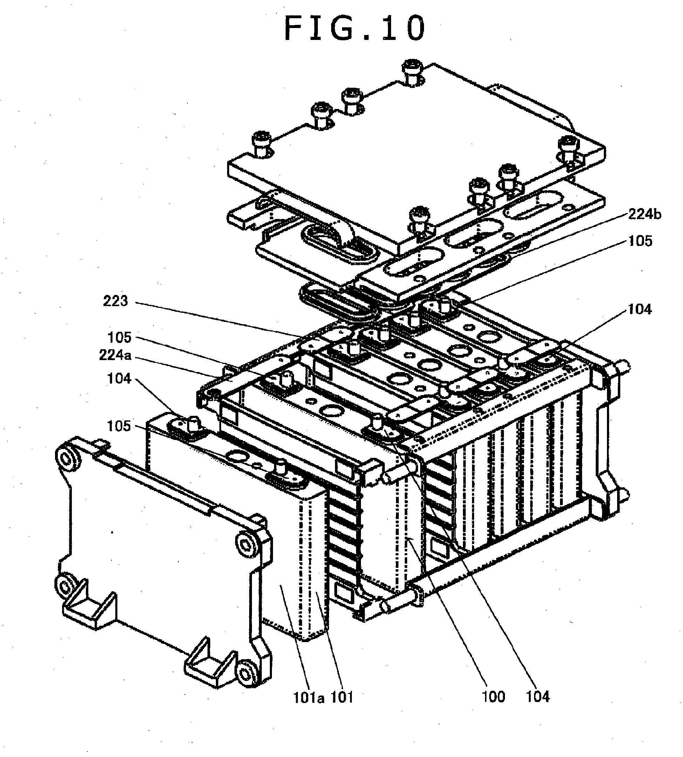

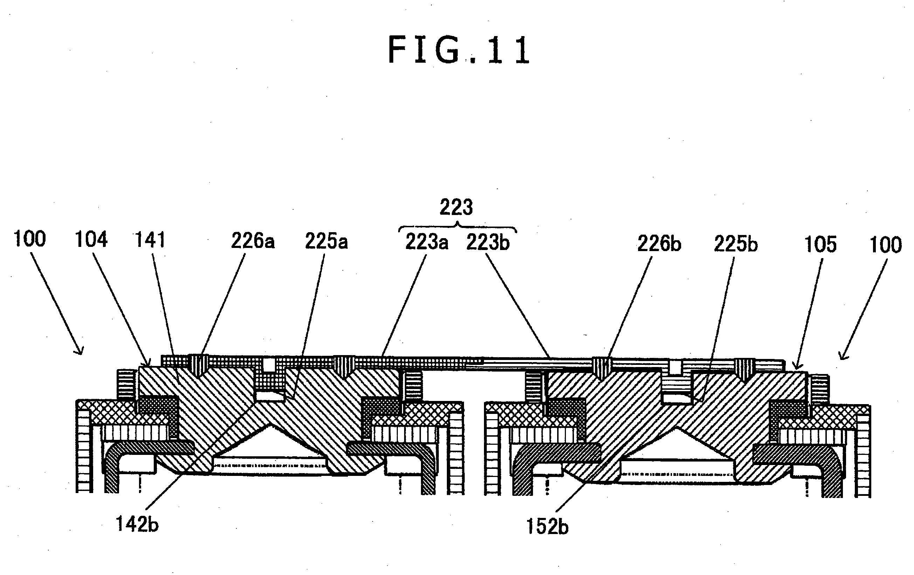

While FIG. 3 illustrates a battery in which busbars 123 and 124 are connected to the external terminals by nuts 132 and bolts 131, the electric cells 100 of the present embodiment also allow welding of the busbars 123 and 124 to the external terminals. FIG. 10 is an exploded perspective view of an assembled battery in which busbars 223 and 224 are welded, and FIG. 11 is a cross section illustrating a busbar 223 welded to the positive welding section 141 and the negative welding section of an electric cell 100.

As illustrated in FIG. 10, busbars 223 are used to electrically connect multiple electric cells 100 to one another. In the battery of FIG. 10, the busbars 223 are welded to the positive welding sections 141 and the negative welding sections 151 of the cells 100. It should be noted that the positive terminal 104 of the nearest cell 100 and the negative terminal 105 of the farthest cell 100 of FIG. 10 as seen from the viewer are electrically connected to other batteries not illustrated, whether in series or parallel, by busbars 224a and 224b. They can also be connected via the busbars 224a and 224b to power-extracting terminals not illustrated.

As illustrated in FIG. 11, each of the busbars 223 is formed of a composite material (e.g., a clad material). The composite material is formed by, for example, placing one end of an aluminum plate 223a on one end of a copper plate 223b and then performing heating treatment for diffusion bonding.

The aluminum plate 223a of each busbar 223 includes a projection 225a protruding from its bottom surface that comes into contact with the contact surface 142a of a positive external terminal 104 toward the cell side. Likewise, the copper plate 223b of each busbar 223 includes a projection 225b protruding from its bottom surface that comes into contact with the contact surface 152a of a negative external terminal 105 toward the cell side.

To weld a busbar 223, it is first aligned by fitting its projections 225a and 225b into the concave sections 142b and 152b located on the contact surfaces 142a and 152a of positive and negative external terminals 104 and 105. By doing so, the busbar 223 can be aligned with ease and accuracy. After the alignment, the aluminum plate 223a of the busbar 223 is laser-welded onto the positive welding section 141, and the copper plate 223b is laser-welded onto the negative welding section 151. As illustrated in FIG. 11, the laser welding results in the formation of welded metal 226a between the positive external terminal 104 and the busbar 223 and welded metal 226b between the negative external terminal 105 and the busbar 223. The welded metal 226a forms a conductive path between the positive external terminal 104 and the busbar 223 while the welded metal 226b forms a conductive path between the negative external terminal 105 and the busbar 223.

The above-described embodiment offers the following advantages.
1) As stated above, each electric cell 100 is designed such that an external terminal 104 (105) includes a bolting section 145 (155) to which a busbar is fastened by a nut and a bolt and a welding section 141 (151), located adjacent to the bolting section 145 (155), to which a busbar is welded. Thus, the electric cells and the battery of the above-described embodiment allow busbars to be connected to the external terminals 104 and 105 either by bolting or welding.
2) The secondary cell of JP-2011-233399-A includes connection pins for connecting external terminals to collector electrodes (referred to as the 'connection plates' in JP-2011-233399-A). By contrast, in the above-described embodiment, a connector 143 (153) protrudes from the welding section 141 (151) toward the inside of the cell container, is connected to a collector electrode 180 (190) through a cell cover 102, and formed integral with a contact section 142 (152). This means that, in the above-described embodiment, the external terminal 104 (105) is directly connected to the collector electrode 180 (190). As a result, the electric cells of the above embodiment have fewer components and thus a simpler structure than the secondary cell of JP-2011-233399-A. Accordingly, the electric cells of the above embodiment can easily be assembled, allowing manufacturing cost reduction. The direct connection of the external terminal 104 (105) to the collector electrode 180 (190) also allows reduction of connection resistance compared with the secondary cell of JP-2011-233399-A.
3) The contact surface 142a (152a) of the contact section 142 (152) includes a concave section 142b (152b), which is located at the central axis of the cylindrical connector 143 (153). This allows easy and accurate alignment of a swage mold and composite busbars 223.

The following modifications are also possible according to the present invention, and one or some of them can be combined with the above-described embodiment.
1) Based on the above embodiment, we have described an example in which busbars 123 and 124 are connected to the positive and negative external terminals 104 and 105 by nuts and bolts and an example in which busbars 223 and 224 are welded to the external terminals 104 and 105 (see FIGS. 3 and 10); however, the invention is not limited to those examples. It is also possible to connect one end of a busbar 123 to the positive external terminal 104 (or the negative external terminal 105) of a cell 100 using a nut and a bolt and weld the other end of the busbar 123 to the negative external terminal 105 (or the positive external terminal 104) of another cell 100.

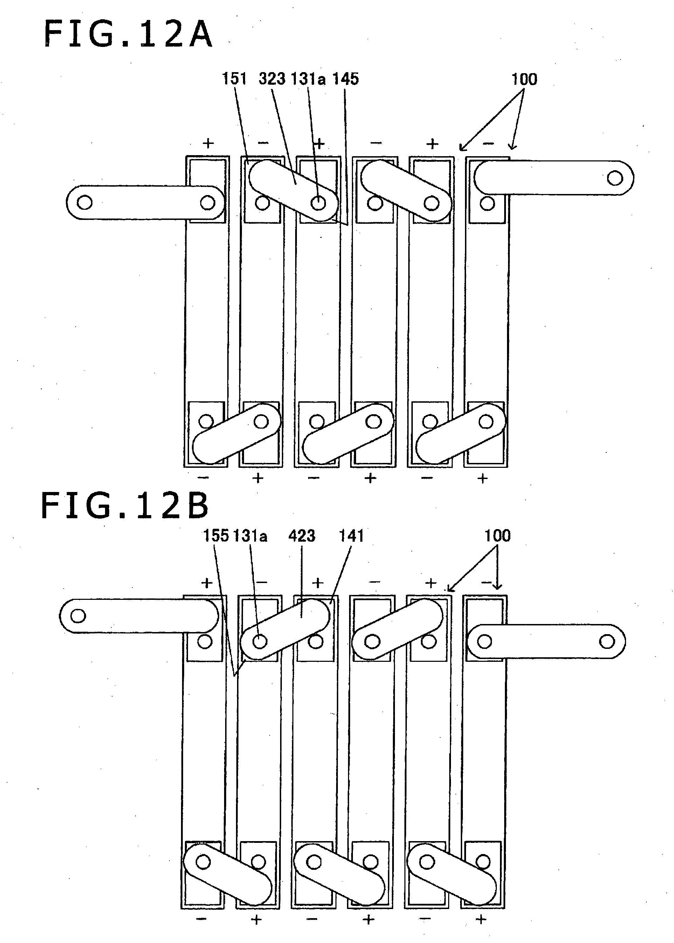

For example, in the assembled battery of FIG. 12A, one end of a copper busbar 323 is fastened to a positive bolting section 145 by inserting the shaft 131a of a bolt 131 into the through-hole of the busbar 323 and screwing a nut onto the shaft 131a of the bolt 131. The other end of the busbar 323 is welded to a negative bolting section 151.

Since the negative external terminal 105 is formed of copper, the busbar 323, formed not of a clad material but of copper, can be welded to the negative external terminal 105. The busbar 323 can also be connected to the positive external terminal 104 by a nut 132 and a bolt 131.

As illustrated in FIG. 12B, when an aluminum busbar 423 is used in place of the copper busbar 323, the busbar 423 can be welded to the positive external terminal 104 and connected to the negative external terminal 105 by a nut 132 and a bolt 131.
2) While we have described an example in which bolts 131 are assembled to the cells of a battery, the invention is not limited thereto. Instead, the battery can have structures capable of holding the bolts 131. In that case, when busbars are all welded to the cells, the use of the bolts 131 can be avoided. Also, when one end of a busbar is bolted to an external terminal and the other end of the busbar is welded to another external terminal, a bolt 131 can be assembled only to the former external terminal on the bolting side. As above, by using fewer bolts or not using bolts at all, the weight and manufacturing cost of the battery can be reduced.
3) In the above-described embodiment, the heads 131b of bolts 131 are housed within the concave engagement sections 102a of a cell cover 102 (i.e., within the positive-side and negative-side spaces). However, the positive-side and negative-side spaces can also house nuts 132 in place of the heads 131b of the bolts 131.
4) The materials of positive external terminals 104, positive collector electrodes 180, and positive foils 171 are not limited to aluminum but include aluminum alloy as well. Likewise, the materials of negative external terminals 105, negative collector electrodes 190, and negative foils 172 are not limited to copper but include copper alloy as well.
5) While we have described an example in which lithium-ion secondary cells are used to form a battery, the invention is not limited thereto. The invention can also be applied to other electric cells, such as nickel-hydrogen cells, that house electric storage units using containers.
6) While we have stated that the battery of the invention is intended for use for the electric storage devices of hybrid or regular electric cars, application of the battery is not limited thereto. The battery can also be used for the electric storage devices of other electric vehicles such as hybrid trains, electric buses, electric trucks, and battery-driven forklift trucks.

The present invention is not limited to the above-described embodiment. Unless the features and advantages of the invention are impaired, other modifications that are conceivable based on the technical ideas of the invention are also embraced within the scope of the invention.

## Claims

1. An electric cell comprising:
a power generating element including electrodes;
a cell container including a cell case for housing the power generating element and a cell cover for sealing an opening of the cell case;
two external terminals disposed on the cell cover; and
two collector electrodes for connecting the electrodes of the power generating element to the external terminals;
wherein each of the external terminals includes: a connector connected to one of the collector electrodes within the cell container; a flat section located right above the connector and exposed to the outside of the cell container; and a bolting section located adjacent to the flat section and having an insertion hole, and
wherein the connector, the flat section, and the bolting section are integrally formed.

2. The electric cell of claim 1 wherein a space is provided between the bolting section and the cell cover.

3. The electric cell of claim 2, further comprising two bolts each used for fastening a busbar to one of the bolting sections;
wherein two concave engagement sections are formed on the cell cover so that heads of the bolts are fitted into the concave engagement sections via insulators,
wherein the space is defined by one of the concave engagement sections and one of the bolting sections,
wherein shafts of the bolts are inserted into the insertion holes of the bolting sections, and
wherein the connector extends from the flat section toward the inside of the cell container and penetrates the cell cover.

4. The electric cell of one of claims 1 to 3
wherein the connector has a cylindrical shape and is connected to one of the collector electrodes by a distal end of the connector being swaged, and
wherein a concave section is formed on the part of the flat section at which a central axis of the connector is located.

5. An assembled battery comprising a plurality of electric cells as defined in claim 1, the plurality of electric cells being electrically connected to one another by busbars,
wherein the busbars are welded to the flat sections.

6. An assembled battery comprising a plurality of electric cells as defined in claim 1, the plurality of electric cells being electrically connected to one another by busbars,
wherein the plurality of electric cells constituting the assembled battery further include bolts for fastening the busbars to the bolting sections, and
wherein the busbars are fastened to the bolting sections by nuts being screwed onto shafts of the bolts.

7. An assembled battery comprising a plurality of electric cells as defined in claim 1, the plurality of electric cells being electrically connected to one another by busbars,
wherein each of the plurality of electric cells constituting the assembled battery further include, either on the positive or negative side, a bolt for fastening one of the busbars to one of the bolting sections, and
wherein one end of the busbar is fastened to the bolting section on the positive or negative side by a nut being screwed onto a shaft of the bolt and the other end of the busbar is welded to the flat section on the negative or positive side.

## Patentansprüche

1. Elektrische Zelle, die umfasst:
ein Leistungserzeugungselement, das Elektroden aufweist;
einen Zellenbehälter, der ein Zellengehäuse für die Unterbringung des Leistungserzeugungselements und einer Zellenabdeckung zum Verschließen einer Öffnung des Zellengehäuses aufweist;
zwei äußere Anschlüsse, die an der Zellenabdeckung angeordnet sind; und
zwei Kollektorelektroden, um die Elektroden des Leistungserzeugungselements mit den äußeren Anschlüssen zu verbinden;
wobei jeder der äußeren Anschlüsse enthält: einen Verbinder, der in dem Zellenbehälter mit einer der Kollektorelektroden verbunden ist; einen flachen Abschnitt, der sich direkt über dem Verbinder befindet und zur äußeren Umgebung des Zellenbehälters frei liegt; und einen Verschraubungsabschnitt, der sich in der Nähe des flachen Abschnitts befindet und ein Einsetzloch besitzt, und
wobei der Verbinder, der flache Abschnitt und der Verschraubungsabschnitt einteilig ausgebildet sind.

2. Elektrische Zelle nach Anspruch 1, wobei zwischen dem Verschraubungsabschnitt und der Zellenabdeckung ein Zwischenraum vorgesehen ist.

3. Elektrische Zelle nach Anspruch 2, die ferner zwei Schraubbolzen umfasst, wovon jeder verwendet wird, um eine Sammelschiene an jeweils einem der Verschraubungsabschnitte zu befestigen;
wobei an der Zellenabdeckung zwei konkave Eingriffabschnitte ausgebildet sind, so dass Köpfe der Schraubbolzen in die konkaven Eingriffabschnitte über Isolatoren eingesetzt sein können,
wobei der Zwischenraum durch einen der konkaven Eingriffabschnitte und einen der Verschraubungsabschnitte definiert ist,
wobei Schäfte der Schraubbolzen in die Einsetzlöcher der Verschraubungsabschnitte eingesetzt sind und
wobei sich der Verbinder von dem flachen Abschnitt zu der Innenseite des Zellenbehälters erstreckt und in die Zellenabdeckung eindringt.

4. Elektrische Zelle nach einem der Ansprüche 1 bis 3,
wobei der Verbinder eine zylindrische Form hat und mit einer der Kollektorelektroden durch ein distales Ende des Verbinders, das gesenkgeschmiedet ist, verbunden ist und
wobei ein konkaver Abschnitt an dem Teil des flachen Abschnitts ausgebildet ist, an dem sich eine Mittelachse des Verbinders befindet.

5. Zusammengefügte Batterie, die mehrere elektrische Zellen nach Anspruch 1 enthält, wobei die mehreren elektrischen Zellen durch Sammelschienen elektrisch miteinander verbunden sind,
wobei die Sammelschienen an die flachen Abschnitte geschweißt sind.

6. Zusammengefügte Batterie, die mehrere elektrische Zellen nach Anspruch 1 enthält, wobei die mehreren elektrischen Zellen durch Sammelschienen elektrisch miteinander verbunden sind,
wobei die mehreren elektrischen Zellen, die die zusammengefügte Batterie bilden, ferner Schraubbolzen aufweisen, um die Sammelschienen an den Verschraubungsabschnitten zu befestigen, und
wobei die Sammelschienen an den Verschraubungsabschnitten durch Muttern, die auf Schäfte der Schraubbolzen geschraubt sind, befestigt sind.

7. Zusammengefügte Batterie, die mehrere elektrische Zellen nach Anspruch 1 enthält, wobei die mehreren elektrischen Zellen durch Sammelschienen elektrisch miteinander verbunden sind,
wobei jede der mehreren elektrischen Zellen, die die zusammengefügte Batterie bilden, ferner entweder auf der positiven oder der negativen Seite einen Schraubbolzen, um eine der Sammelschienen an einem der Verschraubungsabschnitte zu befestigen, aufweist, und
wobei ein Ende der Sammelschiene an dem Verschraubungsabschnitt der positiven oder negativen Seite durch eine Mutter befestigt sind, die auf einen Schaft des Schraubbolzens geschraubt ist, während das andere Ende der Sammelschiene an den flachen Abschnitt auf der negativen oder der positiven Seite geschweißt ist.

## Revendications

1. Cellule électrique comprenant :
un élément de génération d'énergie incluant des électrodes ;
un récipient de cellule incluant un boîtier de cellule pour loger l'élément de génération d'énergie et un couvercle de cellule pour sceller une ouverture du boîtier de cellule ;
deux bornes externes disposées sur le couvercle de cellule ; et
deux électrodes de collecteur pour connecter les électrodes de l'élément de génération d'énergie aux bornes externes ;
dans laquelle chacune des bornes externes inclut : un connecteur connecté à une des électrodes de collecteur à l'intérieur du récipient de cellule ; une section plate située juste au-dessus du connecteur et exposée à l'extérieur du récipient de cellule ; et une section de boulonnage située adjacente à la section plate et ayant un trou d'insertion, et
dans laquelle le connecteur, la section plate, et la section de boulonnage sont formés de façon intégrale.

2. Cellule électrique selon la revendication 1 dans laquelle un espace est prévu entre la section de boulonnage et le couvercle de cellule.

3. Cellule électrique selon la revendication 2, comprenant en outre deux boulons, chacun utilisé pour fixer une barre omnibus à une des sections de boulonnage ;
dans laquelle deux sections concaves d'engagement sont formées sur le couvercle de cellule de telle sorte que des têtes des boulons sont ajustées à l'intérieur des sections concaves d'engagement par l'intermédiaire d'isolateurs,
dans laquelle l'espace est défini par une des sections concaves d'engagement et une des sections de boulonnage,
dans laquelle des tiges des boulons sont insérées à l'intérieur des trous d'insertion des sections de boulonnage, et
dans laquelle le connecteur s'étend à partir de la section plate vers l'intérieur du récipient de cellule et pénètre le couvercle de cellule.

4. Cellule électrique selon l'une des revendications 1 à 3
dans laquelle le connecteur a une forme cylindrique et est connecté à une des électrodes de collecteur par une extrémité distale du connecteur étant emboutie, et
dans laquelle une section concave est formée sur la partie de la section plate au niveau de laquelle un axe central du connecteur est situé.

5. Batterie assemblée comprenant une pluralité de cellules électriques selon la revendication 1, la pluralité de cellules électriques étant électriquement connectées les unes aux autres par des barres omnibus,
dans laquelle les barres omnibus sont soudées sur les sections plates.

6. Batterie assemblée comprenant une pluralité de cellules électriques selon la revendication 1, la pluralité de cellules électriques étant électriquement connectées les unes aux autres par des barres omnibus,
dans laquelle la pluralité de cellules électriques constituant la batterie assemblée incluent en outre des boulons pour fixer les barres omnibus aux sections de boulonnage, et
dans laquelle les barres omnibus sont fixées aux sections de boulonnage par des écrous étant vissés sur des tiges des boulons.

7. Batterie assemblée comprenant une pluralité de cellules électriques selon la revendication 1, la pluralité de cellules électriques étant électriquement connectées les unes aux autres par des barres omnibus,
dans laquelle chacune de la pluralité de cellules électriques constituant la batterie assemblée inclut en outre, soit sur le côté positif, soit sur le côté négatif, un boulon pour fixer une des barres omnibus à une des sections de boulonnage, et
dans laquelle une extrémité de la barre omnibus est fixée à la section de boulonnage sur le côté positif ou négatif par un écrou étant vissé sur une tige du boulon et l'autre extrémité de la barre omnibus est soudée sur la section plate sur le côté négatif ou positif.
